Europäisches Patentamt

(19) European Patent Office

Office européen des brevets

(11) Publication number: **0 381 064**
**A2**

## (12) EUROPEAN PATENT APPLICATION

(21) Application number: **90101551.1**

(22) Date of filing: **26.01.90**

(51) Int. Cl.⁵: **G06F 15/64**

(30) Priority: **30.01.89 US 303148**

(43) Date of publication of application:
**08.08.90 Bulletin 90/32**

(84) Designated Contracting States:
**DE FR GB IT**

(71) Applicant: **HONEYWELL INC.**
**Honeywell Plaza**
**Minneapolis Minnesota 55408(US)**

(72) Inventor: **Hancock, William R.**
**1026 E. Tierra Buena Lane**
**Phoenix, AZ 85022(US)**

(74) Representative: **Rentzsch, Heinz et al**
**Honeywell Europe S.A. Holding KG Patent &**
**License Dept. Postfach 10 08 65**
**Kaiserleistrasse 39**
**D-6050 Offenbach am Main(DE)**

(54) **Addressing mechanism for accessing multiple neighboring locations from full field memory in parallel.**

(57) An apparatus for accessing a plurality of neighboring pixel locations from a full field memory (30) in parallel includes means for dividing the full field memory into quarters (14, 16, 18, 20), means (10, 12) for modifying incoming X and Y addresses to access the screen location which is contained in its addressing space, and means (22) for arranging the data buses so as to cause the pixels to be output on the appropriate screen location positions, as, for example, the four corners (I0, I1, I2, I3) of a portion of a display screen.

*Fig. 1*

EP 0 381 064 A2

# ADDRESSING MECHANISM FOR ACCESSING MULTIPLE NEIGHBORING LOCATIONS FROM FULL FIELD MEMORY IN PARALLEL

This invention relates generally to data processing for graphic display systems and, more particularly, to an addressing mechanism for accessing multiple neighboring locations from full field memory in parallel in order to simplify bi-linear interpolation data accessing during rotation and scaling of raster images in a digital map, radar or other digitized video system.

Recently, avionics displays have been designed to display aeronautical charts and other information to an aircraft pilot. The information displayed is generated from a digital data base and is referred to as a "digital map".

In other applications, it is desirable to display radar or other video data. All these applications require rotation, scaling and warping of such input sensor data which, in turn, requires bi-linear interpolation to achieve satisfactory results. In a typical video readout system, bi-linear interpolation of pixels is accomplished after accessing four neighboring pixels. In order to accomplish the bi-linear interpolation within a satisfactory time period, extremely fast memories are required for serial accesses of the pixels. The neighboring pixels needed to process a given point sometimes are at much different addresses since an offset of 1 can result in numerous address bits changing. Further, some bi-linear interpolation schemes require high speed parallel accessing and will not accept serial accessing of pixel data.

Prior art video readout systems addressed these requirements by reducing the resolution of the readout area so that sufficient time was available to access the four neighboring pixels in serial fashion. Other approaches included maintaining four complete copies of the full field memories used in such digital map systems wherein each copy is offset by 1 in X or Y from the original, and then the parallel read is very straightforward, but the amount of memory required is excessive.

The invention as characterized in the independent claims reduces the required memory space and the processing time. In a basic embodiment of the invention the full field memory is divided into four quarters. Each quarter has its own address and data bus. The controlling logic then modifies the incoming X,Y addresses to access the corner which is contained in its addressing space. The four data buses then must be rearranged such that the four pixels are output on the appropriate corner positions for the bi-linear interpolator. In this application, the four corners are ordered from left to right and top to bottom. The invention also detects address overflow to blank pixels which are outside of the addressing space.

It is one advantage of the invention to provide the four corners of a pixel group at a given readout point in real time and with full resolution without requiring any additional memory for the full field memory and without requiring extremely fast memory speeds. The invention allows serial data input modes while generating the addressing for such modes. It is yet another advantage of the invention that the input and output modes can also be reversed such that four corners can be written in parallel while the readout modes would be strictly serial. This feature is useful for anti-aliasing or automatic line doubling. Further improvements and modifications of the invention are described in the dependent claims.

## SUMMARY OF THE INVENTION

An apparatus for accessing a plurality of neighboring pixel locations from a full field memory in parallel comprises means for dividing the full field memory into sections wherein each section has an address and data bus; means for modifying incoming X,Y addresses to access the screen location which is contained in its addressing space and means for arranging the data buses so as to cause the plurality of pixels to be output on the appropriate screen location positions wherein the dividing means, modifying means and arranging means cooperate to process the data so that the plurality of neighboring pixel locations are output in parallel and in a predetermined arrangement.

## BRIEF DESCRIPTION OF THE DRAWINGS

Further objects, advantages and features of the invention will be appreciated by those skilled in the art through the description, claims and drawings herein. In the drawings like numerals refer to like elements.

Figure 1 shows schematically one embodiment of the invention in block diagram form.

Figure 2 shows schematically the data multiplexing scheme of the invention for outputting the neighboring pixel locations in a parallel fashion.

Figure 3 schematically shows in block diagram form the data multiplexing for X address data in one illustrative embodiment of the invention.

## DESCRIPTION OF THE PREFERRED EMBODIMENT

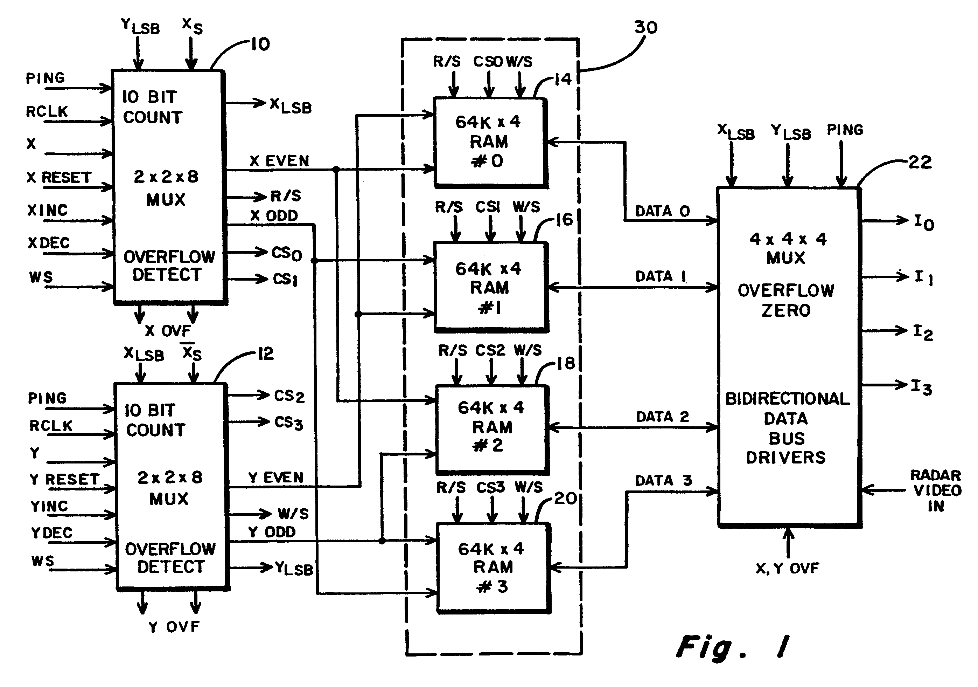

Now referring to Figure 1, one example of an embodiment of the invention is shown schematically in block diagram form. This particular embodiment processes radar video data but can easily handle digital map or other types of digitized video data. The embodiment shown in Figure 1 includes address control chips 10 and 12, full field memory 30 and data control chip 22. The full field memory 30 is organized into sections wherein each section comprises a random access memory (RAM) having an equal share of the total memory locations. It is to be understood by those skilled in the art that Figure 1 shows half of the total data processing elements required in a typical scene memory for a radar video system as used in a "PING/PONG" scheme generally used in such systems and typically practiced by those skilled in the art. To complete the full scene memory needed in a digital system, one needs only to duplicate the elements shown in Figure 1, replacing PING with PONG wherever shown wherein PONG is equal to the inverse of PING. Thus, for example, while the PONG full field memory (FFM) is in a read-out mode, the PING section is in the data reception mode. Once the FFM is filled, the PING and PONG states are reversed such that the just-filled FFM becomes the read-out memory, while the other FFM begins receiving the next pair of radar video frames.

Having described generally one embodiment of the invention, a further understanding of the invention can be accomplished through the following description of a particular example. In one example of the invention the full field memory 30 may be organized into four 256x256x4 memory areas, each of which may be represented by a single 64kx4 RAM. However, in order to achieve the advantages of the invention, each area is interleaved by the least significant bits (LSBs) of X and Y. Thus, during the write mode wherein data is received by the address control chips 10 and 12, the 64kx4 RAM chosen for a particular address is determined by the LSB of X and Y as shown in Table I below.

TABLE I

| X LSB | Y LSB | RAM SELECTED |
|-------|-------|--------------|
| 0 | 0 | RAM0 (14) |
| 1 | 0 | RAM1 (16) |
| 0 | 1 | RAM2 (18) |
| 1 | 1 | RAM3 (20) |

In this example of an application of the invention, the address to each 64kx4 RAM is taken from X bits 1-8 and Y bits 1-8, with the LSB (bit 0) of X,Y being used to do the chip selection. The most significant bit (MSB), bit 9 is not used during writing; however, in the readout modes it detects the off-screen accesses (X,Y OVF).

Still referring to Figure 1, address control chip 10 includes inputs PING, RCLK, X RESET, X INC, X DEC, WS, YLSB and XS. Similarly, address control chip 12 has inputs PING, RCLK, Y, Y RESET, Y INC, Y DEC, WS, Y OVF. Both address control chips include a 10-bit counter, a 2x2x8 multiplexer and overflow detection capabilities. The address control chips for X and Y, 10 and 12, respectively, are functionally equivalent and could be implemented, for example, in a pair of gate arrays or with discrete logic elements. The minor differences between the two address chips could be advantageously controlled by the XS (X select) line. The X address control chip 10 does read/strobe and chip select for RAM0 and RAM1 and the Y address control chip 12 performs write/strobe and chip selects for RAM2 and RAM3.

Outputs for address control chip 10 include XLSB, X OVF, X EVEN, R/S, X ODD, CS0 and CS1. Address control chip 12 includes outputs Y EVEN, Y ODD, CS2, CS3, YLSB, W/S and Y OVF.

PING is a logical signal which activates the address control chips 10 and 12. Since PING is equal to the inverse of PONG, one part of the scene memory can be updated while the other is being scanned by the

3

readout function. Thus, while one FFM is in a readout mode (PONG), the other is in the data reception mode (PING).

RCLK is the read clock control for the data processing circuitry shown in Figure 1. This may be, for example, the same clock which is synchronized to the radar video input circuitry (not shown).

X is a 10 bit bus which carries the address data for the X coordinate. Similarly, Y in address control chip 12 carries the 10 bit address data for the Y coordinate.

X RESET is a reset line which is activated by an external signal, supplied, for example, by a printed circuit board which interfaces with a radar system. Similarly, Y RESET resets the Y address data chip 12. X INC is an externally generated signal which commands the X address chip 10 to increment X. Similarly, Y INC causes the Y address data chip 12 to increment Y.

X DEC and Y DEC operate upon activation to decrement the X and Y addresses, respectively.

W/S for both chips 10 and 12 is the control signal for a read/strobe (R/S) in the case of chip 10 and a write/strobe (W/S) in the case of chip 12.

The X select or XS signals choose which set of data causes the chip selects, CS0, CS1, CS2, and CS3 to be designated from the X or Y address control chips. As can be seen with reference to Figure 1, the RAMs which comprise the FFM 30 are controlled by chip selects CS0-CS3 and have read/strobe and write/strobe inputs as well as bidirectional buses connecting the RAMs to the data control chip 22.

Address control chip 10 is connected to RAM0 14 and RAM2 18 by means of the X EVEN bus. The X EVEN bus is an 8 bit bus in this example. Address control chip 10 is connected to RAM1 16 and RAM3 20 by means of the X ODD bus which is also an 8 bit bus. X EVEN and X ODD carry X bits 1-8. Address control chip 12 is connected to RAM0 14 and RAM1 16 through the Y EVEN bus. Connections to RAM2 18 and RAM3 20 are made through the Y ODD bus. Both Y EVEN and Y ODD advantageously comprise 8 bit buses carrying Y bits 1-8.

The data control chip 22 includes the bidirectional, 4 bit buses DATA 0-DATA 3 connected to RAM0-RAM3 in parallel. Other inputs include X,Y OVF and RADAR VIDEO IN. Data control chip 22 further may comprise a 4x4x4 multiplexer with a zero overflow capability as well as bidirectional data bus drivers. Outputs include 4 bit buses I0, I1, I2 and I3. I0-I3 are preferably 4 bit parallel readout buses wherein the I0 output must always be in the upper left corner of the display, I1 the upper right corner, I2 the lower left corner and I3 the lower right corner.

Having described one embodiment of the invention, it will now prove helpful to the understanding of the invention to describe an example of the operation of the invention.

During the data acquisition mode, for example, data is received at the RADAR VIDEO IN line from electronics associated with a radar system in, for example, an aircraft (not shown), at the pixel rate of digitization which may typically be 512 pixels per raster line. Control signals needed to operate the 10 bit counters within the address control chips 10 and 12 are also generated externally. In response to the external controls sending signals through the inputs PING, RCLK, X RESET, etc., the 10 bit counters inherent in the address control chips 10 and 12 will generate the X and Y addresses which are subsequently sent to the FFM. Y will be reset at the start of a vertical scan and incremented once for odd frames, then X will be reset at the start of each line. X is then incremented once per digitization or decremented for alternate lines depending on the scan mode being implemented by the video readout system. At the end of each line, Y is incremented twice to account for interlacing. The write/strobe signal (W/S) is clocked once for each pixel after allowing for setup times. In this mode, the data control chip 22 is set to route the radar video signal directly to all four 64kx4 RAM data buses. The address control chips 10 and 12 then control the chip selects CS0-CS3 to insure only the proper RAM is written into. The X address control chip 10 does read/strobe and chip selects CS0 and CS1 and the Y address control chip 12 performs write/strobe and chip selects CS2 and CS3.

One important aspect of the invention is the ability to output in parallel the four pixels which surround the desired fractional readout point for bi-linear interpolation which may be carried out downstream of the scene memory block shown in Figure 1. The full field memory is set up to accommodate this requirement by outputting the four adjacent pixels when given the X,Y coordinate of the upper left corner (for example, X,Y integer position). Whenever, the read clock (RCLK) goes active, all four RAMs are enabled to output their data, but the address to each chip is potentially different according to Table II.

TABLE II

| X LSB | Y LSB | RAM0 | RAM1 | RAM2 | RAM3 |
|---|---|---|---|---|---|
| 0 | 0 | X,Y | X+1,Y | X,Y+1 | X+1,Y+1 |
| 1 | 0 | X+1,Y | X,Y | X+1,Y+1 | X,Y+1 |
| 0 | 1 | X,Y+1 | X+1,Y+1 | X,Y | X+1,Y |
| 1 | 1 | X+1,Y+1 | X,Y+1 | X+1,Y | X,Y |

Again, only bits 1-8 of X and Y, respectively, are sent to the RAM selected, the most significant bit (MSB) 9 determines overflow whenever it is non-zero. The data control chip takes the four outputs from each RAM and routes it to the proper final output I0 through I3 as described above. Thus, the data control chip must route each RAM output according to the scheme shown in Table III below.

TABLE III

| X LSB | Y LSB | 10 | 11 | 12 | 13 |
|---|---|---|---|---|---|
| 0 | 0 | RAM0 | RAM1 | RAM2 | RAM3 |
| 1 | 0 | RAM1 | RAM0 | RAM3 | RAM2 |
| 0 | 1 | RAM2 | RAM3 | RAM0 | RAM1 |
| 1 | 1 | RAM3 | RAM2 | RAM1 | RAM0 |

In addition, the four overflow bits (MSB of X,X+1,Y,Y+1) must be considered such that 0 is output if an address is out of the valid FFM bounds. The valid FFM bounds are application specific and are predetermined in a manner well known in the art. The blanking function is controlled as shown in Table IV hereinbelow.

TABLE IV

| NON-ZERO BIT | OUTPUTS BLANKED |
|---|---|
| X MSB | I0,I2 |
| X+1 MSB | I1,I3 |
| Y MSB | I0,I1 |
| Y+1 MSB | I2,I3 |

Now referring to Figure 2, the data multiplexing scheme for the output of the data control chip 22 is shown schematically. Figure 2 is a pictorial representation of Table III. In Figure 2, UL designates the upper left pixel, UR designates the upper right pixel, LL designates the lower left pixel and LR designates the lower right pixel.

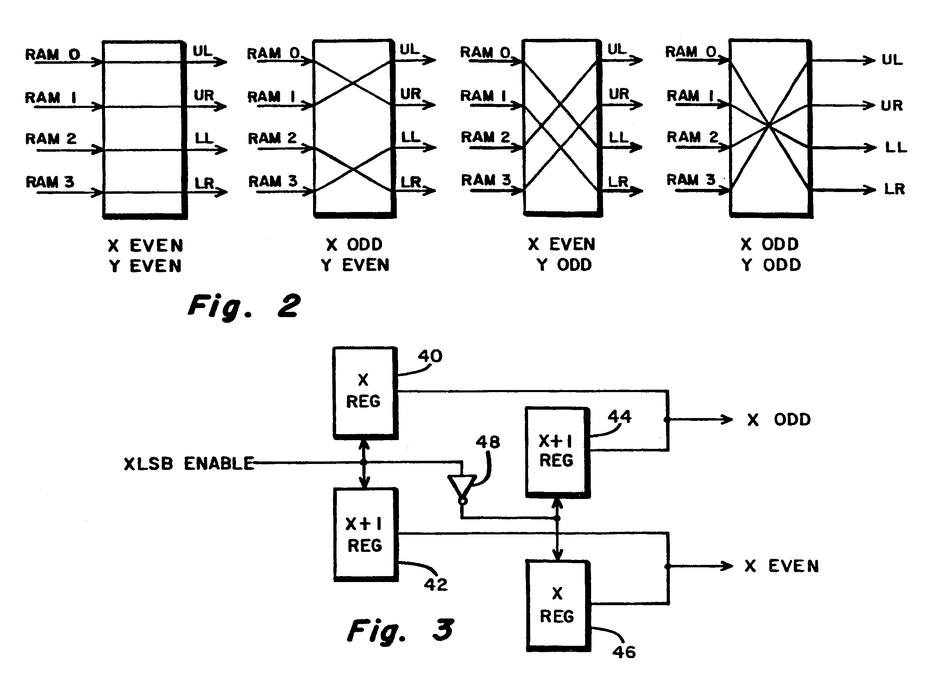

Figure 3 shows in block diagram form a schematic representation of the X data multiplexing scheme of the invention. Registers 40, 42, 44 and 46 would be contained internal to X address control chip 10 in a preferred embodiment of the invention. The least significant bit or "0" bit of X would be routed to the XLSB ENABLE line shown. Depending on the value of XLSB ENABLE, the X data would be routed to the X EVEN bus or the X ODD bus. Registers 40 and 46 would contain data corresponding to the address for X while registers 42 and 44 would contain the address X+1.

In operation, if, for example, XLSB=1, registers 40 and 42 would be enabled thereby sending the odd value for X to the X ODD bus and the even value for X+1 to the X EVEN bus. At the same time, due to inverter 48, registers 44 and 46 would be disabled. As can be appreciated by those skilled in the art, the Y address control chip 12 operates in a similar manner routing the Y and Y+1 addresses according to the value of YLSB. Thus, the multiplexing as shown in Table III and Figure 2 is accomplished.

Those skilled in the art can appreciate that the invention can be carried out in many different ways. For

5

example, the RAM memories may be any memories which operate in the range of about 80 to 90 nanoseconds. Utilizing the teachings of the invention, this would allow reading of four neighboring pixels in about 109 nanoseconds which, if done in series form, would require super fast, very expensive RAMs. The data control chip and address control chips may advantageously be implemented in semiconductor form. Circuitry embodying both the PING and PONG sides of scene memory would most advantageously be a two-sided, multi-layered printed circuit board having one side for PING FFM, the other side for PONG FFM. Also, one could implement the address scheme of the invention for other applications that require the interlacing of less than four pixels or more than four pixels and wherein the positions are ordered according to a predetermined scheme based upon screen location of the pixels other than four corners. Similarly, the addressing scheme of the invention may be used in applications where the data is not representative of pixels for a graphic display, but may represent other types of data.

Alternative embodiments of the invention could write data into memory by assigning X and Y addresses so as to correspond to the screen location which is contained in the memory's addressing space according to a multiplexing scheme based upon the values of the least significant bits of X and Y. To accomplish such writing of data, the flow of the multiplexing scheme shown in Figure 2 would be reversed. Further, the configuration shown in Figures 1 and 2 could be layered advantageously to be adapted to access or write a matrix of neighboring pixels, such as a four-by-four matrix. In such a layered configuration, the number of elements would obviously be doubled with both X and Y having four data paths each. In addition, the full field memory would consist of sixteen memory sets instead of four. Expansion of the principles of the invention to larger matrixes would merely require the addition of more layers of the circuitry shown in Figures 1, 2 and 3.

### Claims

1. An apparatus for accessing four neighboring pixel locations from a full field memory in a video readout system in parallel, **characterized by**:

a) means (30) for dividing the full field memory into quarters (14, 16, 18, 20) wherein each quarter has an address and data bus;

b) means (10, 12) for modifying X and Y addresses read into or accessed from the full field memory so as to access the corner which is contained in its addressing space; and

c) means (22) for arranging the address and data buses so as to cause the four pixels to be output on appropriate corner positions.

2. The apparatus of Claim 1, **characterized in that** the data buses are arranged according to a multiplexing scheme (40, 42, 44, 46) based upon the values of the least significant bits of X and Y.

3. The apparatus of Claim 1 or 2, **characterized in that** the full field memory dividing means (30) comprises four random access memory devices (14, 16, 18, 20), each of which stores a quarter of the total data in memory.

4. The apparatus according to claim 3 for accessing four neighboring pixel locations having coordinate addresses in parallel, **characterized by:**

a) the full field memory (30) comprising first, second, third and fourth random access memory devices (14, 16, 18, 20) having inputs to receive address information and data and bidirectional buses (DATA0 - DATA3) to provide access to stored data;

b) first and second address control chips (10, 12), each control chip including a means for counting bits, a means for multiplexing data and a means for detecting overflow of data, the first and second address control chips having buses connected to the first through fourth memory means so as to cause the pixel locations to be routed to designated random access memory devices as designated by the least significant bits of the coordinate addresses of the pixel locations; and

c) a data control chip (22) connected to the bidirectional buses (DATA0 - DATA3) of the first through fourth random access memory devices and further having bidirectional data bus drivers connected to the random access devices' bidirectional buses (DATA0 - DATA3), means for detecting zero overflow and blanking pixels being routed to the outputs, and further including means for multiplexing data.

5. The apparatus of Claim 4, **characterized in that** the data control chip (22) includes four outputs (I0, I1, I2, I3) corresponding to screen locations in the upper left corner, upper right corner, lower left corner and lower right corner of a display screen, respectively.

6. The apparatus of Claim 4 or 5, **characterized in that** the data control chip (22) further has a means for receiving video data and means for busing (DATA0 -DATA3) the video data to the first, second, third and fourth random access memory devices (14, 16, 18, 20) for storage.

7. An apparatus for accessing a plurality of neighboring pixel locations from a full field memory (30) in parallel for use in a video readout system having a display screen with screen locations for displaying pixel information, **characterized by :**

a) means for dividing the full field memory into sections (14, 16, 18, 20) wherein each section has an address and data bus;

b) means (10, 12) for modifying X and Y addresses read into or accessed from the full field memory so as to access the screen location which is contained in its addressing space; and

c) means (22) for arranging the address and data buses so as to cause the plurality of pixels to be output according to a predetermined arrangement according to its screen location.

8. The apparatus of Claim 7, **characterized in that** the address and data buses are controlled according to a multiplexing scheme (40, 42, 44, 46) based upon the values of the least significant bits of X and Y.

9. The apparatus of Claim 4 or 7, **characterized in that** the plurality of neighboring pixels includes a matrix of pixels and the apparatus is layered so as to be adapted to access or write a matrix which is larger than a two-by-two matrix of neighboring pixels.

10. The apparatus of Claim 8, **characterized in that** the matrix is a four-by-four matrix.

11. The apparatus according to one of the preceding claims, **characterized in that** the least significant bits of X and Y are interleaved within the quarters or sections, respectively, of the full field memory.

12. The apparatus of one of the preceding claims, **characterized in that** the elements are doubled into a PING/PONG scheme.

13. An apparatus for writing a plurality of neighboring pixel locations into a full field memory (30) in parallel for use in a video redout system having a display screen with screen locations for displaying pixel information comprising:

a) means for dividing the full field memory into sections (14, 16, 18, 20) wherein each section has an address and data bus; and

b) means (10, 12) for assigning X and Y addresses written into the full field memory so as to correspond to the screen location which is contained in the full field memory's addressing space according to a multiplexing scheme (40, 42, 44, 46) based upon the values of the least significant bits of X and Y.

14. The apparatus of Claim 13, wherein the plurality of neighboring pixels includes at least four pixels.

Fig. 1

EP 0 381 064 A2

| RAM 0 | UL | RAM 0 | UL | RAM 0 | UL | RAM 0 | UL |
| RAM 1 | UR | RAM 1 | UR | RAM 1 | UR | RAM 1 | UR |
| RAM 2 | LL | RAM 2 | LL | RAM 2 | LL | RAM 2 | LL |
| RAM 3 | LR | RAM 3 | LR | RAM 3 | LR | RAM 3 | LR |

X EVEN
Y EVEN

X ODD
Y EVEN

X EVEN
Y ODD

X ODD
Y ODD

## Fig. 2

X REG 40

X+1 REG 44 → X ODD

XLSB ENABLE 48

X+1 REG 42

X REG 46 → X EVEN

## Fig. 3

EP 0 381 064 A2